# EUROPEAN PATENT APPLICATION

(11) **EP 4 346 189 A1**
(43) Date of publication of application: **03.04.2024**
(21) Application number: 23188541.9
(22) Date of filing: 28.07.2023
(51) Int. Cl.: H04L 67/12, H04Q 9/00, H04W 4/38

(54) **METHODS AND SYSTEMS FOR OPERATING A SENSOR NETWORK**

(30) Priority: 12.09.2022 US 202263405675 P; 06.03.2023 US 202318178984
(71) Applicant: Analog Devices, Inc., Wilmington, MA 01887 (US)
(72) Inventor: STEIN, Yosef, Wilmington, 01887 (US); MALEPATI, Hazarathaiah, Wilmington, 01887 (US); CHAVES, Armindo, Wilmington, 01887 (US)
(74) Representative: Yang, Shu

(57) **Abstract**

Aspects of the present disclosure include a detection system including a base device including a power source configured to provide electrical energy to a plurality of edge nodes of a sensor network and a base data link configured to transmit a sensor interrogation signal to at least one of the plurality of edge nodes in the detection system and receive reporting information from at least one of the plurality of edge nodes, and the plurality of edge nodes sequentially coupled within the sensor network, wherein each edge node includes an edge data link configured to receive at least a portion of the electrical energy and the sensor interrogation signal, relay the at least a portion of the electrical energy and the sensor interrogation signal to a next edge node of the plurality of edge nodes, and transmit to the base device, in response to the sensor interrogation signal, the reporting information including sensor information associated with the edge node or a no selection match indication.

## Description

### CROSS-REFERENCE TO RELATED APPLICATIONS

The present application claims priority to, and the benefit of, United States Non-Provisional Application No. 18/178,984, filed March 6, 2023 and entitled "METHODS AND SYSTEMS FOR OPERATING A SENSOR NETWORK," and United States Provisional Application No. 63/405,675, filed December 12, 2022 and entitled "WIRELESS INTEGRITY SENSING NETWORK ALLOWING ACQUISITION OF A SELECTABLE DATA SET FROM A MIX OF SENSING ELEMENTS ON A NETWORK".

### BACKGROUND

Many applications require sensors to monitor a structural integrity of devices being used. For example, the maintenance crew of an airline may use multiple sensors to monitor the air frame of planes. The maintenance crew may monitor for corrosion, metallic fatigue, fissure/cracks, temperature, humidity, and/or other factors associated with the air frame. However, this process may be costly and time consuming. Therefore, improvements may be desirable.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Aspects of the present disclosure include a detection system including a base device including a power source configured to provide electrical energy to a plurality of edge nodes of a sensor network and a base data link configured to transmit a sensor interrogation signal to at least one of the plurality of edge nodes in the detection system and receive reporting information from at least one of the plurality of edge nodes, and the plurality of edge nodes sequentially coupled within the sensor network, wherein each edge node includes an edge data link configured to receive at least a portion of the electrical energy and the sensor interrogation signal, relay the at least a portion of the electrical energy and the sensor interrogation signal to a next edge node of the plurality of edge nodes, and transmit to the base device, in response to the sensor interrogation signal, the reporting information including sensor information associated with the edge node or a no selection match indication.

Aspects of the present disclosure include a method including providing, from a base device, electrical energy to a plurality of edge nodes of a sensor network, transmitting, from the base device, a sensor interrogation signal to at least one of the plurality of edge nodes in the detection system, receiving, at the at least one of the plurality of edge nodes, at least a portion of the electrical energy and the sensor interrogation signal, relaying, at the at least one of the plurality of edge nodes, the at least a portion of the electrical energy and the sensor interrogation signal to a next edge node of the plurality of edge nodes, transmitting, from the at least one of the plurality of edge nodes, to the base device, in response to the sensor interrogation signal, the reporting information including sensor information associated with the edge node or a no selection match indication, and receiving, at the base device, reporting information from at least one of the plurality of edge nodes.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a schematic diagram of an example of a detection system according to some aspects of the present disclosure.
FIG. 2 is a table representing an example of a data structure associated with a sensor of the plurality of sensors of the detection system of Fig. 1.
FIG. 3 is a schematic diagram of an example of a controller according to some aspects of the present disclosure.
FIG. 4 is a flowchart of an example of a method for performing electrochemical impedance spectroscopy (EIS) in a reconfigurable battery system according to some aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

An aspect of the present disclosure includes a detection system having a base device and one or more edge nodes. The base device may be configured to provide electrical energy to the one or more edge nodes. The base device may be configured to transmit a sensor interrogation signal to a first edge node of the one or more edge nodes. The first edge node may relay the received sensor interrogation signal to a second edge node of the one or more edge nodes.

In certain aspects, the one or more edge nodes may be connected to one or more sensors, such as but not limited to corrosion detection sensors, humidity sensors, crack detection sensors, strain/stress sensors, temperature sensors, fatigue sensors, vibration sensors, erosion sensors, and/or other types of sensors. The one or more edge nodes may receive sensor information from the corresponding sensors.

In some aspects, the sensor interrogation signal may include selection information indicating which of the one or more edge nodes, and/or which of the one or more associated sensors, is to transmit the corresponding sensor information. The one or more edge nodes may sequentially receive the sensor interrogation signal. In response to the selection information, the selected edge nodes may transmit the corresponding sensor information back to the base device.

In one implementation, for example, the described aspects may be configured as a wireless integrity sensing network that allows a user to acquire a selectable and synchronized data set from a mix of sensing elements on a network bus. In this implementation, the system includes a base module for power and network data transfer, an array of edge nodes each connected to at least one sensing element, and a network terminator that identifies an end of the network. The acquired sensor information can be selected according to: all sensors on the bus, sensor type, sensor group, and a single sensor using its identifier number. Thus, the system allows a user to acquire a selectable and synchronized data set from a configurable mix of sensing elements.

An advantage of an aspect of the current disclosure includes the ability to customize data set. Another advantage includes integrating various types of sensors by utilizing edge nodes to interface with the various types of sensors. Another advantage includes a quick and convenient method of receiving sensor information.

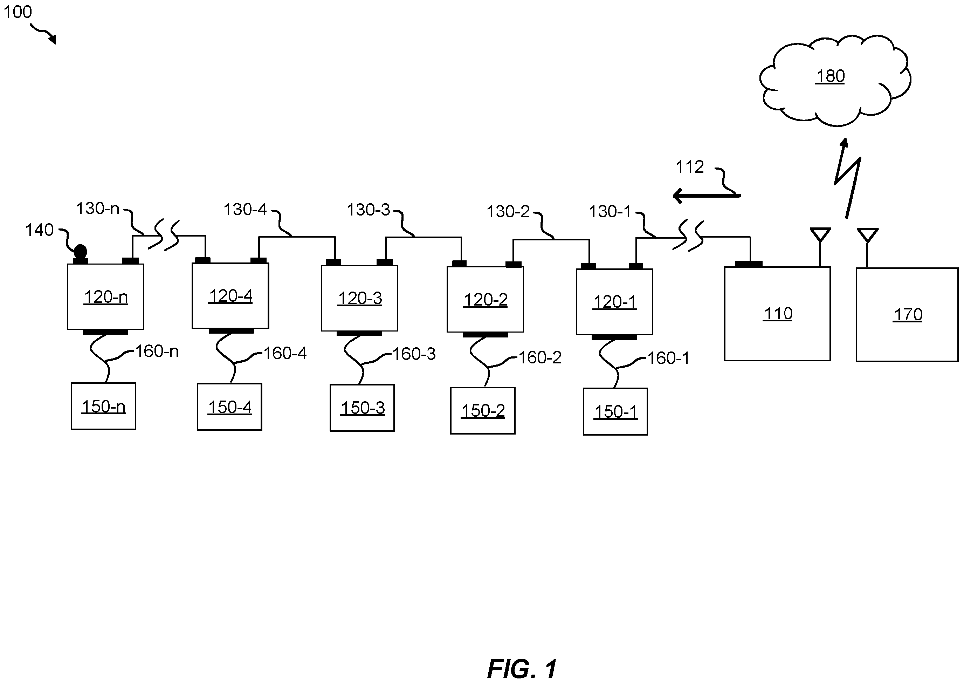

FIG. 1 illustrates an example of a detection system 100 according to aspects of the present disclosure. In some aspects, the detection system 100 may include a base device 110. The detection system 100 may include a plurality of edge nodes 120-1, 120-2... 120-n, where n is a positive integer. The detection system 100 may include a plurality of links 130-1, 130-2... 130-n electrically connecting two or more of the base device 110 and the plurality of edge nodes 120-1, 120-2... 120-n. The detection system 100 may include a network terminator 140 configured to signal a last "node" of the detection system 100. In some aspects, the detection system 100 may include a reader 170.

In optional implementations, the detection system 100 may include a plurality of sensors 150-1, 15-2... 150-n. The detection system 100 may include a plurality of sensor links 160-1, 160-2... 160-n.

In one aspect of the present disclosure, the base device 110 may be configured to provide electrical energy to the plurality of edge nodes 120-1, 120-2... 120-n, as well as to transmit a sensor interrogation signal 112 to the edge node 120-1. In one aspect, the electrical energy of the sensor interrogation signal 112 may be provided to the plurality of edge nodes 120-1, 120-2... 120-n for operation. The sensor interrogation signal 112 may include selection information for selecting at least a subset of the plurality of edge nodes 120-1, 120-2... 120-n, and/or a subset of a plurality of sensors 150-1, 150-2... 150-n associated therewith. The at least one subset of the plurality of edge nodes 120-1, 120-2... 120-n identified by the sensor interrogation signal 112 may transmit the corresponding sensor information back to the base device 110.

In certain aspects of the present disclosure, each of the plurality of edge nodes 120-1, 120-2... 120-n may be configured to receive the sensor interrogation signal 112 from either the base device 110 or a previous edge node. Each of the plurality of edge nodes 120-1, 120-2... 120-n may be configured to relay the received sensor interrogation signal 112 to a subsequent edge node or the network terminator 140.

In some aspects, the plurality of edge nodes 120-1, 120-2... 120-n may be configured to receive sensor information from a corresponding sensor of the plurality of sensors 150-1, 150-2... 150-n. The sensor information may include, but is not limited to, strain, stress, cracks, fissures, humidity, temperature, vibration, corrosion, and/or other parameters measured by the corresponding sensor of the plurality of sensors 150-1, 150-2... 150-n.

In an aspect of the present disclosure, the sensor information may include a timestamp to synchronize the sensor information collected by the plurality of edge nodes 120-1, 120-2... 120-n. Additionally or alternatively, the sensor information may include location information associated with the plurality of edge nodes 120-1, 120-2... 120-n and/or the plurality of sensors 150-1, 150-2... 150-n.

In an alternative aspect of the present disclosure, the base device 110 may append timestamps and/or location information to the sensor information upon receiving the sensor information.

In certain aspects, the sensor interrogation signal 112 may include selection information to select the at least subset of the plurality of edge nodes 120-1, 120-2... 120-n and/or the plurality of sensors 150-1, 150-2... 150-n for calibration. The sensor interrogation signal 112 may optionally include calibration parameters used for the calibration process.

In an aspect of the present disclosure, the reader 170 may be configured to transmit the sensor interrogation signal 112, or information carried in the sensor interrogation signal 112, to the base device 110. The reader 170 may be configured to receive the selected sensor information from the base device 110. The reader 170 may be configured as a Health Usage Monitoring System (HUMS). The reader 170 may be configured to upload the selected sensor information received from the corresponding sensor of the plurality of sensors 150-1, 150-2... 150-n via the at least one subset of the plurality of edge nodes 120-1, 120-2... 120-n. In alternative implementations, the base device 110 may be configured to upload the selected sensor information received from the corresponding sensor of the plurality of sensors 150-1, 150-2... 150-n via the at least one subset of the plurality of edge nodes 120-1, 120-2... 120-n.

In certain aspects of the present disclosure, the reader 170 may generate the selection information by including one or more of the following information associated with the at least one subset of the plurality of edge nodes 120-1, 120-2... 120-n: a sensor identifier (ID), a group ID, a sensor type ID, and/or a cyclic redundancy check (CRC). The selection information may identify the at least one subset of the plurality of edge nodes 120-1, 120-2... 120-n based on one or more of the above identifiers.

In one aspect of the present disclosure, the sensor ID may be a bit string (e.g., 10 bits, 20 bits, 30 bits, or other number of bits) that uniquely identifies a particular edge node of the plurality of edge nodes 120-1, 120-2... 120-n, and/or a particular sensor of the plurality of sensors 150-1, 150-2... 150-n. The group ID may be a bit string (e.g., 2 bits, 4 bits, 6 bits, or other number of bits) that identifies a group of the plurality of edge nodes 120-1, 120-2... 120-n, and/or a particular sensor of the sensors 150-1, 150-2... 150-n. In one example, a group ID of 00 may identify the edge nodes 120-2 and 120-4, a group ID of 01 may identify the edge nodes 120-1, 120-2, and 120-3, a group ID of 10 may identify the edge nodes 120-1 and 120-3, and a group ID of 11 may identify the edge node 120-4. In certain aspects of the present disclosure, the group ID may indicate a group of edge nodes associated with general purpose (GP) sensors, a group of edge nodes associated with carbon nanotube (CNT) sensors, and/or a group of edge nodes associated with a combination of GP sensors and CNT sensors. In some aspects of the present disclosure, the group ID may indicate a group of edge nodes associated with a first location (e.g., left wing of an airplane), a group of edge nodes associated with a second location (e.g., right wing of an airplane, etc.

In some aspects, the sensor type ID may indicate the type of sensor selected for the sensor information. For example, the sensor type ID may be a bit string indicating a strain sensor (e.g., sensor type ID 000), a stress sensor (e.g., sensor type ID 001), a cracks sensor (e.g., sensor type ID 010), a fissures sensor (e.g., sensor type ID 011), a humidity sensor (e.g., sensor type ID 100), a temperature sensor (e.g., sensor type ID 101), a vibration sensor (e.g., sensor type ID 110), a corrosion sensor (e.g., sensor type ID 111), and/or other types of sensors. Any of the plurality of edge nodes 120-1, 120-2... 120-n being coupled to a sensor identified by the sensor type ID may transmit sensor information back to the base device 110. In certain implementations, the sensor type ID may include reserve values for GP sensor type IDs. The CRC may include redundancy information for checking the integrity of the bit strings associated with the sensor ID, the group ID, and/or the sensor type ID. In one configuration, the CRC may be a 4-bit parity using CRC-4. Other configurations of CRC may be used according to aspects of the present disclosure.

In some aspects, the plurality of sensors 150-1, 150-2... 150-n may have embedded power supplies (not shown) configured to supply electrical energy to the plurality of sensors 150-1, 150-2... 150-n. In other aspects, the plurality of sensors 150-1, 150-2... 150-n may not include any embedded power supplies. As such, the plurality of edge nodes 120-1, 120-2... 120-n may provide electrical energy to the plurality of sensors 150-1, 150-2... 150-n using electrical energy obtained from the base device 110.

In a first example of operation, the detection system 100 may include twenty (20) edge nodes (i.e., n = 20) where the sensors 150-1, 150-3, 150-5, 150-7, and 150-9 are strain sensors, and the sensors 150-2, 150-4, 150-6, 150-8, and 150-10 are corrosion sensors. The sensors 150-11 to 150-20 may be other types of sensors. The reader 170 may transmit selection information to select strain sensors for feedback. Therefore, the selection information may indicate a unique sensor type ID associated with the strain sensor, such as but not limited to an sensor type ID value of "0100." The reader 170 may be configured to transmit the selection information to the base device 110. Further, the reader 170 may provide electrical energy (e.g., via wires, wirelessly via energy harvesting, etc.) to the base device 110.

In response to receiving the selection information and/or the electrical energy, the base device 110 may transmit a sensor interrogation signal 112 including the selection information to the edge node 120-1. The edge node 120-1 (coupled to a strain sensor) may receive the sensor interrogation signal 112 and determine that the selection information indicates the selection of strain sensor (sensor type ID: 0100). In response, based on sensor 150-1 being a strain sensor and thereby matching the received sensor type ID, the edge node 120-1 may interrogate the sensor 150-1 for any detected strain measurement value(s). The edge node 120-1 may receive information associated with the strain detected by the sensor 150-1, and transmit the received information back to the base device 110.

The edge node 120-1 may relay at least a portion of the sensor interrogation signal 112 to the edge node 120-2. The edge node 120-2 (coupled to a corrosion sensor) may receive the at least a portion of the sensor interrogation signal 112 and determine that the selection information indicates the selection of strain sensor (sensor type ID: 0100). In response, based on associated sensor 150-2 not having a matching sensor type ID, the edge node 120-2 may refrain from interrogating the sensor 150-2 and/or transmitting any information back to the base device 110. The edge node 120-2 may relay the at least a portion of the sensor interrogation signal 112 to the edge node 120-3, and so forth and so on.

In some aspects of this example, the edge node 120-20 may receive the at least a portion of the sensor interrogation signal 112, and relay at least a portion of the sensor interrogation signal 112 to the network terminator 140. In one implementation, the network terminator 140 may transmit an end of network indication back to the base device 110. In another implementation, the edge node 120-20 may transmit the end of network indication back to the base device 110 in response to transmitting the at least a portion of the sensor interrogation signal 112 to the network terminator 140 based on being associated with the network terminator 140.

In a second example of operation, the detection system 100 may include ten (10) edge nodes (i.e., n = 10) where the sensors 150-1, 150-2, 150-3, and 150-4 are CNT sensors, and the sensors 150-5, 150-6, 150-7, 150-8, 150-9, and 150-10 are GP sensors. The reader 170 may transmit selection information to select the group of CNT sensors. Therefore, the selection information may indicate a unique group ID associated with the CNT sensors. , such as but not limited to an sensor type ID value of "00." The reader 170 may be configured to transmit the selection information to the base device 110. Further, the reader 170 may provide electrical energy (e.g., via wires, wirelessly via energy harvesting, etc.) to the base device 110.

In response to receiving the selection information and/or the electrical energy, the base device 110 may transmit a sensor interrogation signal 112 including the selection information to the edge node 120-1. The edge node 120-1 (coupled to a CNT sensor) may receive the sensor interrogation signal 112 and determine that the selection information indicates the selection of CNT sensors (group ID: 00). In response, the edge node 120-1 may interrogate the sensor 150-1 (e.g., a strain sensor, a corrosion sensor, a crack sensor...). The edge node 120-1 may receive information associated with the physical parameter detected by the sensor 150-1, and transmit the received information back to the base device 110.

The edge node 120-1 may relay at least a portion of the sensor interrogation signal 112 to the edge node 120-2, and so forth and so on.

The edge node 120-5 may receive the at least a portion of the sensor interrogation signal 112 relayed by the edge node 120-4 and determine that the group ID indicates the selection of CNT sensors (indicated as group ID: 00). In response, the edge node 120-5 may refrain from interrogating the sensor 150-2 and/or transmitting any information back to the base device 110.

In a third example of operation, the detection system 100 may include thirty (30) edge nodes (i.e., n = 30). The reader 170 may transmit selection information to select the sensors 150-1 to 150-10 for calibration. Therefore, the selection information may indicate sensors IDs associated with the sensors 150-1 to 150-10. Further, the selection information may indicate a calibration indication, and/or calibration parameters associated with the sensors 150-1 to 150-10. The reader 170 may be configured to transmit the selection information to the base device 110. Further, the reader 170 may provide electrical energy (e.g., via wires, wirelessly via energy harvesting, etc.) to the base device 110.

In response to receiving the selection information and/or the electrical energy, the base device 110 may transmit a sensor interrogation signal 112 including the selection information to the edge node 120-1. The edge node 120-1 may receive the sensor interrogation signal 112 and determine that the selection information indicates the calibration of the sensor 150-1. In response, the edge node 120-1 may calibrate the sensor 150-1 based on internal calibration parameters, and/or calibration parameters embedded in the sensor interrogation signal 112. The edge node 120-1 may relay at least a portion of the sensor interrogation signal 112 to the edge node 120-2 to perform calibration. The edge nodes 120-1 to 120-10 may perform the calibration as indicated in the sensor interrogation signal 112. The remaining edge nodes 120-11 to 120-30 may refrain from performing calibration.

In a fourth example of operation, the detection system 100 may include fifteen (15) edge nodes (i.e., n = 15) where the edge nodes 120-1 to 120-13 and 120-15 function as designed, and the edge node 120-14 is malfunctioning. The reader 170 may transmit selection information to select the sensors 150-1 to 150-15. The reader 170 may be configured to transmit the selection information to the base device 110. Further, the reader 170 may provide electrical energy (e.g., via wires, wirelessly via energy harvesting, etc.) to the base device 110.

In response to receiving the selection information and/or the electrical energy, the base device 110 may transmit a sensor interrogation signal 112 including the selection information to the edge node 120-1. The edge node 120-1 may relay at least a portion of the sensor interrogation signal 112 to the next edge node (i.e., the edge node 120-2), until the at least a portion of the sensor interrogation signal 112 is sequentially relayed to the edge node 120-13. The edge nodes 120-1 to 120-13 may perform operations (e.g., transmit sensor information back to the base device 110 or perform calibration) indicated in the sensor interrogation signal 112.

In some instances, the edge node 120-13 may relay the at least a portion of the sensor interrogation signal 112 to the edge node 120-14. The edge node 120-14 may be unable to perform the operations indicated in the sensor interrogation signal 112, and/or relay the at least a portion of the sensor interrogation signal 112 to the edge node 120-15 (and by extension, the network terminator). In response to the edge node 120-14 being unable to perform the operations indicated in the sensor interrogation signal 112, and/or relay the at least a portion of the sensor interrogation signal 112 to the edge node 120-15, the base device 110 may identify an error in the detection system 100, such as the edge node 120-14 being defective.

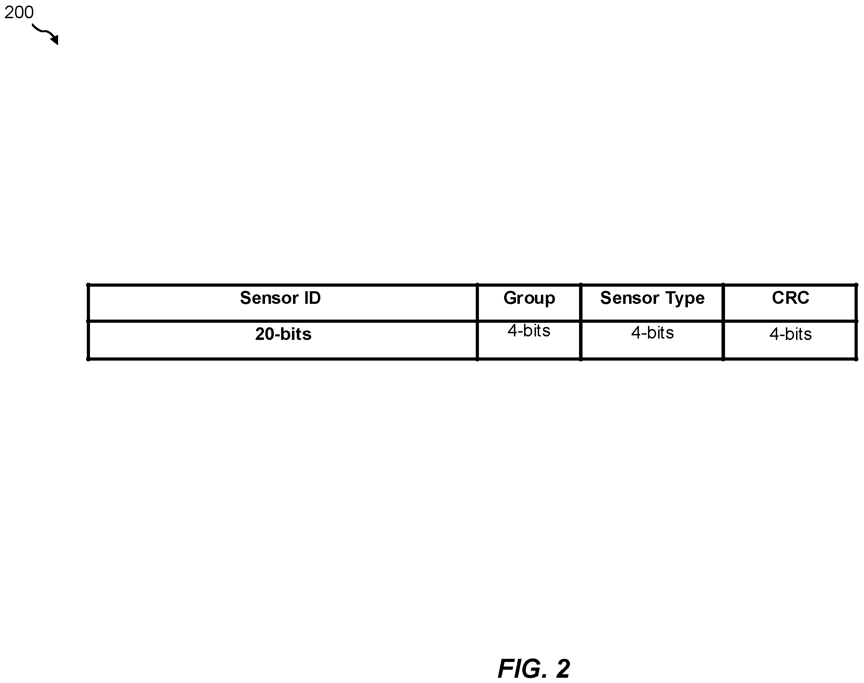

FIG. 2 illustrates an example of a data structure 200 associated with a sensor of the plurality of sensors 150-1, 150-2... 150-n. The data structure 200 may include a configurable number of fields, each having a configurable length. In one example, which should not be construed as limiting, the data structure 200 may include a sensor ID field (20 bits), a group ID field (4 bits), a sensor type ID field (4 bits), and a CRC field (4 bits). In other implementations, the data structure 200 may have different fields and/or different number of bits in each field according to aspects of the present disclosure.

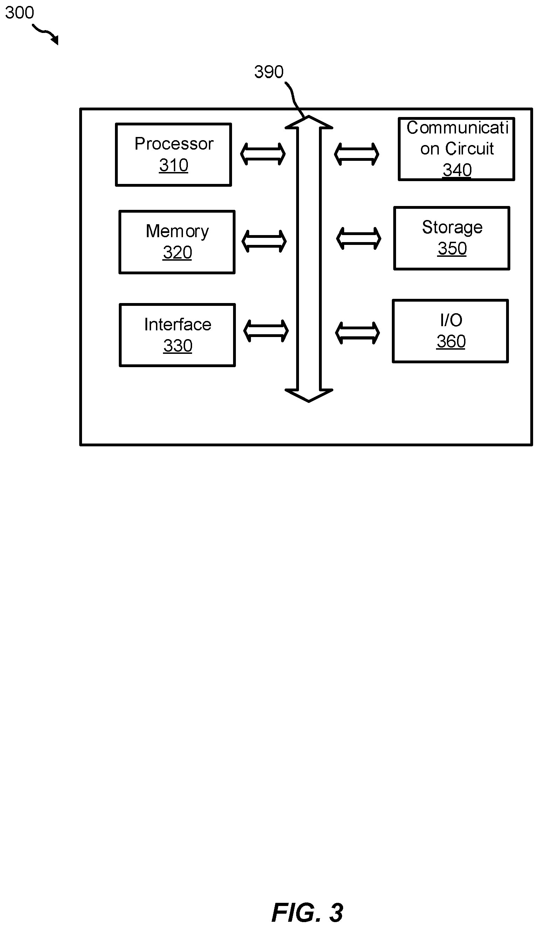

FIG. 3 illustrates an example of a computer device 300 that may implement one or more components of the detection system 100 (FIG. 1). For instance, the computer device 300 may be configured to include some or all of the functions of the base device 100 and/or the reader 170. The computer device 300 may be in a single package or as a chip set assembly with multiple components. The computer device 300 may include a processor 310 configured to execute instructions stored in a memory 320. The memory 320 may include computer executable instructions. The computer device 300 may include an interface circuit 330 configured to provide a hardware interface with external devices. The computer device 300 may include a communication circuit 340 configured to communicate via wired or wireless communication channels. The computer device 300 may include a storage 350 configured to store digital information. The computer device 300 may include an input/output (I/O) interface device 360 configured to receive input signals and/or transmit output signals. One or more of the processor 310, the memory, the interface circuit 330, the communication circuit 340, the storage 350, and/or the IO device 360 may be communicatively coupled via a bus 390.

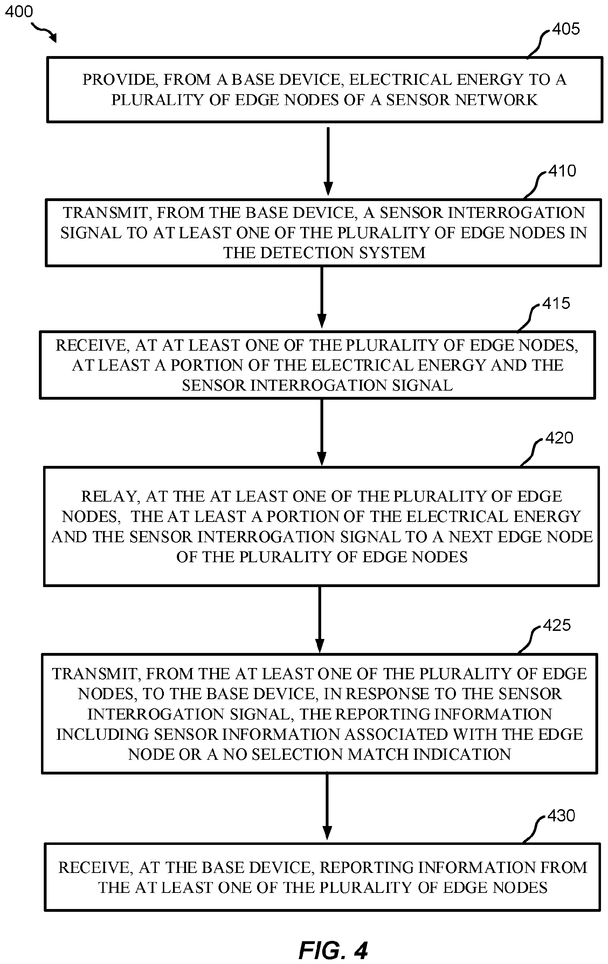

FIG. 4 illustrates a method 400 for operating a detection system. The method 400 may be performed by one or more of the base device 110 and/or the plurality of edge nodes 120-1, 120-2... 120-n.

At 405, the method 400 may provide, from a base device, electrical energy to a plurality of edge nodes of a sensor network. For example, the base device 110 may be configured to, and/or provide the means for, providing, from a base device, electrical energy to a plurality of edge nodes of a sensor network, such as described above.

At 410, the method 400 may transmit, from the base device, a sensor interrogation signal to at least one of the plurality of edge nodes in the detection system. For example, the base device 110 may be configured to, and/or provide the means for, transmitting, from the base device, a sensor interrogation signal to at least one of the plurality of edge nodes in the detection system, such as described above.

At 415, the method 400 may receive, at the at least one of the plurality of edge nodes, at least a portion of the electrical energy and the sensor interrogation signal. For example, one or more of the plurality of edge nodes 120-1, 120-2... 120-n may be configured to, and/or provide the means for, receiving, at the at least one of the plurality of edge nodes, at least a portion of the electrical energy and the sensor interrogation signal, such as described above.

At 420, the method 400 may relay, at the at least one of the plurality of edge nodes, the at least a portion of the electrical energy and the sensor interrogation signal to a next edge node of the plurality of edge nodes. For example, one or more of the plurality of edge nodes 120-1, 120-2... 120-n may be configured to, and/or provide the means for, relaying, at the at least one of the plurality of edge nodes, the at least a portion of the electrical energy and the sensor interrogation signal to a next edge node of the plurality of edge nodes, such as described above.

At 425, the method 400 may transmit, from the at least one of the plurality of edge nodes, to the base device, in response to the sensor interrogation signal, the reporting information including sensor information associated with the edge node or a no selection match indication. For example, one or more of the plurality of edge nodes 120-1, 120-2... 120-n may be configured to, and/or provide the means for, transmitting, from the at least one of the plurality of edge nodes, to the base device, in response to the sensor interrogation signal, the reporting information including sensor information associated with the edge node or a no selection match indication, such as described above.

At 430, the method 400 may receive, at the base device, reporting information from at least one of the plurality of edge nodes. For example, the base device 110 may be configured to, and/or provide the means for, receiving, at the base device, reporting information from at least one of the plurality of edge nodes, such as described above.

Aspects of the present disclosure include a method including providing, from a base device, electrical energy to a plurality of edge nodes of a sensor network, transmitting, from the base device, a sensor interrogation signal to at least one of the plurality of edge nodes in the detection system, receiving, at the at least one of the plurality of edge nodes, at least a portion of the electrical energy and the sensor interrogation signal, relaying, at the at least one of the plurality of edge nodes, the at least a portion of the electrical energy and the sensor interrogation signal to a next edge node of the plurality of edge nodes, transmitting, from the at least one of the plurality of edge nodes, to the base device, in response to the sensor interrogation signal, the reporting information including sensor information associated with the edge node or a no selection match indication, and receiving, at the base device, reporting information from the at least one of the plurality of edge nodes.

Aspects of the present disclosure include a detection system including a base device including a power source configured to provide electrical energy to a plurality of edge nodes of a sensor network and a base data link configured to transmit a sensor interrogation signal to at least one of the plurality of edge nodes in the detection system and receive reporting information from at least one of the plurality of edge nodes, and the plurality of edge nodes sequentially coupled within the sensor network, wherein each edge node includes an edge data link configured to receive at least a portion of the electrical energy and the sensor interrogation signal, relay the at least a portion of the electrical energy and the sensor interrogation signal to a next edge node of the plurality of edge nodes, and transmit to the base device, in response to the sensor interrogation signal, the reporting information including sensor information associated with the edge node or a no selection match indication.

Aspects of the present disclosure include the detection system above, wherein the sensor interrogation signal further includes request information that identifies one or more sensors selected from a plurality of different sensors whose respective sensor information is to be included in the reporting information.

Aspects of the present disclosure include any of the detection systems above, wherein the request information includes one or more of a sensor type identifier (ID) that identifies one of a plurality of sensor types, a sensor ID that uniquely identifies a specific sensor, or a sensor group ID of a set of sensors selected from a plurality of different sensors associated with a region of interest in the sensor network.

Aspects of the present disclosure include any of the detection systems above, further comprising a plurality of sensors, wherein at least one sensor of the plurality of sensors is associated with each edge node.

Aspects of the present disclosure include any of the detection systems above, wherein each of the plurality of sensors are configured to detect at least one of fatigue, cracks, corrosion, erosion, humidity, stress, vibration, strain, or temperature.

Aspects of the present disclosure include any of the detection systems above, wherein the plurality of sensors include an unpowered sensor and a powered sensor.

Aspects of the present disclosure include any of the detection systems above, wherein the sensor interrogation signal further includes request information that identifies a group identifier of a set of sensors selected from a plurality of different sensors associated with a region of interest in the sensor network and the base data link is further configured to receive the sensor information from one or more of the plurality of edge nodes associated with the set of sensors in the region of interest and synchronize the received sensor information from the region of interest.

Aspects of the present disclosure include any of the detection systems above, wherein the sensor interrogation signal is associated with an interrogation time period, and wherein the base data link is configured to synchronize the received sensor information from the region of interest based on the interrogation time period.

Aspects of the present disclosure include any of the detection systems above, wherein the base device includes a processor configured to detect an error in the sensor network in response to failing to receive the reporting information from at least one of the plurality of edge nodes.

Aspects of the present disclosure include any of the detection systems above, wherein the processor of the base device is further configured to detect an error in the sensor network based on the reporting information failing to include an end of network indication.

Aspects of the present disclosure include any of the detection systems above, wherein the processor of the base device is further configured to locate a faulty edge node in the sensor network based on receiving information from at least one of a last valid reporting edge node or failing to receive the end of network indication.

Aspects of the present disclosure include any of the detection systems above, wherein the base device includes a processor configured to calibrate one or more of the plurality of edge nodes.

Aspects of the present disclosure include any of the detection systems above, wherein the base device is further configured to transmit a device sensor calibrate signal to select and calibrate one or more of the plurality of edge nodes based on one or more of a sensor type identifier (ID) that identifies one of a plurality of sensor types, a sensor ID that uniquely identifies a specific sensor, or a sensor group ID of a set of sensors selected from a plurality of different sensors associated with a region of interest in the sensor network.

Aspects of the present disclosure include any of the detection systems above, further comprising a reader or a Health Usage Monitoring System (HUMS) having a reader power source configured to provide the electrical energy to the base device and a data link configured to receive, from the base device, the sensor information.

Aspects of the present disclosure include any of the detection systems above, wherein the reader power source is further configured to wirelessly provide the electrical energy to the base device.

Aspects of the present disclosure include any of the detection systems above, wherein the reader power source of the HUMS is further configured to provide the electrical energy to the base device via a wire.

Aspects of the present disclosure include any of the detection systems above, wherein the reader is further configured to transmit the sensor information to a cloud computing system.

Aspects of the present disclosure include any of the detection systems above, wherein each of the plurality of edge nodes includes one or more of a sensor type identifier (ID) that identifies one of a plurality of sensor types, a sensor ID that uniquely identifies a specific sensor, a sensor group ID of a set of sensors selected from a plurality of different sensors associated with a region of interest in the sensor network, or cyclic redundancy check (CRC) information.

Aspects of the present disclosure include any of the detection systems above, wherein the base data link is further configured to receive, sequentially, respective portions of the sensor information from each of the plurality of edge nodes.

Aspects of the present disclosure include any of the detection systems above, further comprising a plurality of wires, wherein each of the plurality of wires interconnects two of the plurality of edge nodes.

The above detailed description set forth above in connection with the appended drawings describes examples and does not represent the only examples that may be implemented or that are within the scope of the claims. The term "example," when used in this description, means "serving as an example, instance, or illustration," and not "preferred" or "advantageous over other examples." The detailed description includes specific details for the purpose of providing an understanding of the described techniques. These techniques, however, may be practiced without these specific details. For example, changes may be made in the function and arrangement of elements discussed without departing from the scope of the disclosure. Also, various examples may omit, substitute, or add various procedures or components as appropriate. For instance, the methods described may be performed in an order different from that described, and various steps may be added, omitted, or combined. Also, features described with respect to some examples may be combined in other examples. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, computer-executable code or instructions stored on a computer-readable medium, or any combination thereof.

Further, for example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example aspects, the functions described may be implemented in hardware, software, or any combination thereof. If implemented in software, the functions may be stored on or encoded as one or more instructions or code on a non-transitory computer-readable medium. Computer-readable media includes computer storage media. Storage media may be any available media that may be accessed by a computer. By way of example, and not limitation, such computer-readable media may comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by a computer. Further, features implementing functions may also be physically located at various positions, including being distributed such that portions of functions are implemented at different physical locations.

Also, the various illustrative blocks and components described in connection with the disclosure herein may be implemented or performed with a specially-programmed device, such as but not limited to a processor, a digital signal processor (DSP), an ASIC, a FPGA or other programmable logic device, a discrete gate or transistor logic, a discrete hardware component, or any combination thereof designed to perform the functions described herein. A specially-programmed processor may be a microprocessor, but in the alternative, the processor may be any conventional processor, controller, microcontroller, or state machine. A specially-programmed processor may also be implemented as a combination of computing devices, e.g., a combination of a DSP and a microprocessor, multiple microprocessors, one or more microprocessors in conjunction with a DSP core, or any other such configuration.

Also, as used herein, including in the claims, "or" as used in a list of items prefaced by "at least one of" indicates a disjunctive list such that, for example, a list of "at least one of A, B, or C" means A or B or C or AB or AC or BC or ABC (i.e., A and B and C).

The previous description of the disclosure is provided to enable a person skilled in the art to make or use the disclosure. Various modifications to the disclosure will be readily apparent to those skilled in the art, and the common principles defined herein may be applied to other variations without departing from the spirit or scope of the disclosure. Furthermore, although elements of the described aspects may be described or claimed in the singular, the plural is contemplated unless limitation to the singular is explicitly stated. Additionally, all or a portion of any aspect may be utilized with all or a portion of any other aspect, unless stated otherwise. Thus, the disclosure is not to be limited to the examples and designs described herein but is to be accorded the widest scope consistent with the principles and novel features disclosed herein.

### Numbered aspects

By way of non-limiting example, some aspects of the disclosure are set out in the following numbered clauses.

Numbered Clause 1. A detection system, comprising:
a base device including:
a power source configured to provide electrical energy to a plurality of edge nodes of a sensor network,
a base data link configured to:
   transmit a sensor interrogation signal to at least one of the plurality of edge nodes in the detection system; and
   receive reporting information from at least one of the plurality of edge nodes;
   the plurality of edge nodes sequentially coupled within the sensor network, wherein each edge node includes an edge data link configured to:
      receive at least a portion of the electrical energy and the sensor interrogation signal;
      relay the at least a portion of the electrical energy and the sensor interrogation signal to a next edge node of the plurality of edge nodes; and
      transmit to the base device, in response to the sensor interrogation signal, the reporting information including sensor information associated with the edge node or a no selection match indication.

Numbered Clause 2. The detection system of Numbered Clause 1, wherein the sensor interrogation signal further includes request information that identifies one or more sensors selected from a plurality of different sensors whose respective sensor information is to be included in the reporting information.

Numbered Clause 3. The detection system of Numbered Clause 2, wherein the request information includes one or more of a sensor type identifier (ID) that identifies one of a plurality of sensor types, a sensor ID that uniquely identifies a specific sensor, or a sensor group ID of a set of sensors selected from a plurality of different sensors associated with a region of interest in the sensor network.

Numbered Clause 4. The detection system of any preceding Numbered Clause, further comprising a plurality of sensors, wherein at least one sensor of the plurality of sensors is associated with each edge node.

Numbered Clause 5. The detection system of any preceding Numbered Clause 4, wherein each of the plurality of sensors are configured to detect at least one of fatigue, cracks, corrosion, erosion, humidity, stress, vibration, strain, or temperature.

Numbered Clause 6. The detection system of any preceding Numbered Clause 4 or 5, wherein the plurality of sensors include an unpowered sensor and a powered sensor.

Numbered Clause 7. The detection system of any preceding Numbered Clause, wherein:
the sensor interrogation signal further includes request information that identifies a group identifier of a set of sensors selected from a plurality of different sensors associated with a region of interest in the sensor network,
the base data link is further configured to:
   receive the sensor information from one or more of the plurality of edge nodes associated with the set of sensors in the region of interest; and
   synchronize the received sensor information from the region of interest.

Numbered Clause 8. The detection system of Numbered Clause 7, wherein the sensor interrogation signal is associated with an interrogation time period, and wherein the base data link is configured to synchronize the received sensor information from the region of interest based on the interrogation time period.

Numbered Clause 9. The detection system of any preceding Numbered Clause, wherein the base device includes a processor configured to detect an error in the sensor network in response to failing to receive the reporting information from at least one of the plurality of edge nodes.

Numbered Clause 10. The detection system of Numbered Clause 9, wherein the processor of the base device is further configured to detect an error in the sensor network based on the reporting information failing to include an end of network indication.

Numbered Clause 11. The detection system of Numbered Clause 9 or 10, wherein the processor of the base device is further configured to locate a faulty edge node in the sensor network based on receiving information from at least one of a last valid reporting edge node or failing to receive the end of network indication.

Numbered Clause 12. The detection system of any preceding Numbered Clause, wherein the base device includes a processor configured to calibrate one or more of the plurality of edge nodes.

Numbered Clause 13. The detection system of Numbered Clause 12, wherein the base device is further configured to transmit a device sensor calibrate signal to select and calibrate one or more of the plurality of edge nodes based on one or more of a sensor type identifier (ID) that identifies one of a plurality of sensor types, a sensor ID that uniquely identifies a specific sensor, or a sensor group ID of a set of sensors selected from a plurality of different sensors associated with a region of interest in the sensor network.

Numbered Clause 14. The detection system of any preceding Numbered Clause, further comprising a reader or a Health Usage Monitoring System (HUMS) having:
a reader power source configured to provide the electrical energy to the base device, and a data link configured to receive, from the base device, the sensor information.

Numbered Clause 15. The detection system of Numbered Clause 14, wherein the reader power source is further configured to wirelessly provide the electrical energy to the base device.

Numbered Clause 16. The detection system of any preceding Numbered Clause 14 or 15, wherein the reader power source of the HUMS is further configured to provide the electrical energy to the base device via a wire.

Numbered Clause 17. The detection system of Numbered Clause 14, wherein the reader is further configured to transmit the sensor information to a cloud computing system.

Numbered Clause 18. The detection system of any preceding Numbered Clause, wherein each of the plurality of edge nodes includes one or more of a sensor type identifier (ID) that identifies one of a plurality of sensor types, a sensor ID that uniquely identifies a specific sensor, a sensor group ID of a set of sensors selected from a plurality of different sensors associated with a region of interest in the sensor network, or cyclic redundancy check (CRC) information.

Numbered Clause 19. The detection system of any preceding Numbered Clause, wherein the base data link is further configured to receive, sequentially, respective portions of the sensor information from each of the plurality of edge nodes.

Numbered Clause 20. The detection system of any preceding Numbered Clause, further comprising a plurality of wires, wherein each of the plurality of wires interconnects two of the plurality of edge nodes.

## Claims

1. A detection system, comprising:
a base device including:
a power source configured to provide electrical energy to a plurality of edge nodes of a sensor network,
a base data link configured to:
transmit a sensor interrogation signal to at least one of the plurality of edge nodes in the detection system; and
receive reporting information from at least one of the plurality of edge nodes;
the plurality of edge nodes sequentially coupled within the sensor network, wherein each edge node includes an edge data link configured to:
receive at least a portion of the electrical energy and the sensor interrogation signal;
relay the at least a portion of the electrical energy and the sensor interrogation signal to a next edge node of the plurality of edge nodes; and
transmit to the base device, in response to the sensor interrogation signal, the reporting information including sensor information associated with the edge node or a no selection match indication.

2. The detection system of claim 1, wherein the sensor interrogation signal further includes request information that identifies one or more sensors selected from a plurality of different sensors whose respective sensor information is to be included in the reporting information.

3. The detection system of claim 2, wherein the request information includes one or more of a sensor type identifier (ID) that identifies one of a plurality of sensor types, a sensor ID that uniquely identifies a specific sensor, or a sensor group ID of a set of sensors selected from a plurality of different sensors associated with a region of interest in the sensor network.

4. The detection system of any preceding claim, further comprising a plurality of sensors, wherein at least one sensor of the plurality of sensors is associated with each edge node.

5. The detection system of claim 4, wherein each of the plurality of sensors are configured to detect at least one of fatigue, cracks, corrosion, erosion, humidity, stress, vibration, strain, or temperature and/or wherein the plurality of sensors include an unpowered sensor and a powered sensor.

6. The detection system of any preceding claim, wherein:
the sensor interrogation signal further includes request information that identifies a group identifier of a set of sensors selected from a plurality of different sensors associated with a region of interest in the sensor network,
the base data link is further configured to:
receive the sensor information from one or more of the plurality of edge nodes associated with the set of sensors in the region of interest; and
synchronize the received sensor information from the region of interest.

7. The detection system of claim 6, wherein the sensor interrogation signal is associated with an interrogation time period, and wherein the base data link is configured to synchronize the received sensor information from the region of interest based on the interrogation time period.

8. The detection system of any preceding claim, wherein the base device includes a processor configured to detect an error in the sensor network in response to failing to receive the reporting information from at least one of the plurality of edge nodes, preferably wherein the processor of the base device is further configured to detect an error in the sensor network based on the reporting information failing to include an end of network indication, more preferably wherein the processor of the base device is further configured to locate a faulty edge node in the sensor network based on receiving information from at least one of a last valid reporting edge node or failing to receive the end of network indication.

9. The detection system of any preceding claim, wherein the base device includes a processor configured to calibrate one or more of the plurality of edge nodes.

10. The detection system of claim 9, wherein the base device is further configured to transmit a device sensor calibrate signal to select and calibrate one or more of the plurality of edge nodes based on one or more of a sensor type identifier (ID) that identifies one of a plurality of sensor types, a sensor ID that uniquely identifies a specific sensor, or a sensor group ID of a set of sensors selected from a plurality of different sensors associated with a region of interest in the sensor network.

11. The detection system of any preceding claim, further comprising a reader or a Health Usage Monitoring System (HUMS) having:
a reader power source configured to provide the electrical energy to the base device, and
a data link configured to receive, from the base device, the sensor information.

12. The detection system of claim 11, wherein the reader power source is further configured to wirelessly provide the electrical energy to the base device and/or wherein the reader power source of the HUMS is further configured to provide the electrical energy to the base device via a wire and/or, wherein the reader is further configured to transmit the sensor information to a cloud computing system.

13. The detection system of any preceding claim, wherein each of the plurality of edge nodes includes one or more of a sensor type identifier (ID) that identifies one of a plurality of sensor types, a sensor ID that uniquely identifies a specific sensor, a sensor group ID of a set of sensors selected from a plurality of different sensors associated with a region of interest in the sensor network, or cyclic redundancy check (CRC) information.

14. The detection system of any preceding claim, wherein the base data link is further configured to receive, sequentially, respective portions of the sensor information from each of the plurality of edge nodes.

15. The detection system of any preceding claim, further comprising a plurality of wires, wherein each of the plurality of wires interconnects two of the plurality of edge nodes.
